Europäisches Patentamt

European Patent Office

Office européen des brevets

(11) Publication number: **0 091 824**

**B1**

(12) **EUROPEAN PATENT SPECIFICATION**

(45) Date of publication of patent specification: 22.06.88

(21) Application number: **83302054.8**

(22) Date of filing: **12.04.83**

(51) Int. Cl.⁴: **H 04 B 3/56,** H 04 B 3/54

(54) Receiving circuit for a data transmission system.

(30) Priority: **14.04.82 JP 62785/82**

(43) Date of publication of application:
**19.10.83 Bulletin 83/42**

(45) Publication of the grant of the patent:
**22.06.88 Bulletin 88/25**

(84) Designated Contracting States:
**DE FR GB IT**

(56) References cited:

**PATENTS ABSTRACTS OF JAPAN, vol. 3, no. 22(E-93), 24th February 1979, page 76E93; & JP - A - 54 813 (TOKYO DENRYOKU K.K.) 06-01-1979**

(73) Proprietor: **SHARP KABUSHIKI KAISHA 22-22 Nagaike-cho Abeno-ku Osaka 545 (JP)**

(72) Inventor: **Ise, Masahiro 2187-A18-203 Mise-cho Kashihara-shi Nara-ken (JP)**
Inventor: **Tanaka, Hidehiko 2613-1 Ichinomoto-cho Tenri-shi Nara-ken (JP)**
Inventor: **Machino, Katsuyuki 31-101 Higashikidera-cho 1-chome Nara-shi Nara-ken (JP)**
Inventor: **Matsubara, Toshiyuki 2613-1 Ichinomoto-cho Tenri-shi Nara-ken (JP)**
Inventor: **Terasaka, Teiji 2613-1 Ichinomoto-cho Tenri-shi Nara-ken (JP)**

(74) Representative: **Wright, Peter David John et al R.G.C. Jenkins & Co. 26 Caxton Street London SW1H 0RJ (GB)**

Courier Press, Leamington Spa, England.

## Description

The present invention relates to a receiving station for a system in which data is transmitted over a transmission wiring or lines, and more particularly to a receiving station equipped with a receiving circuit capable of data detection regardless of variations in load impedance characteristics over the transmission wiring to which devices of various impedance characteristics are randomly connected.

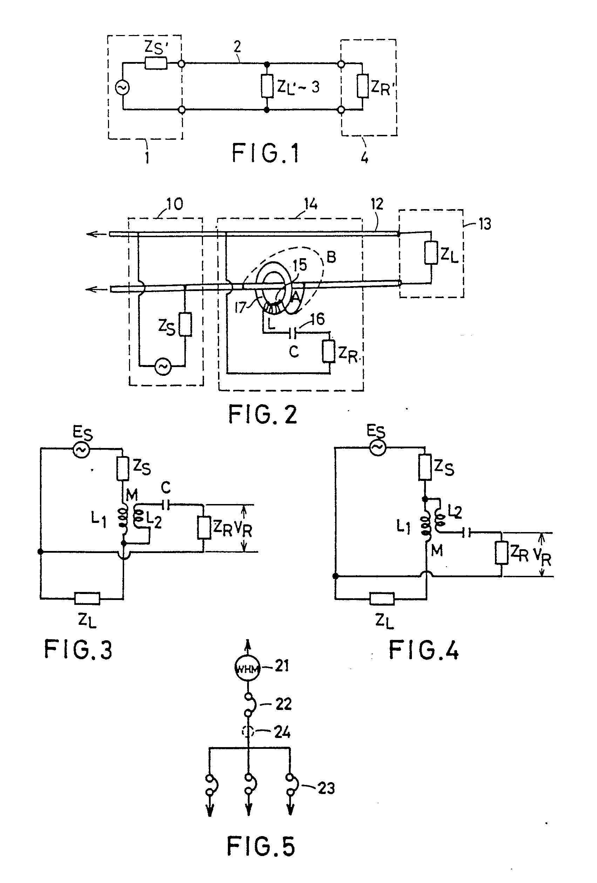

Fig. 1 of the accompanying drawings illustrates a general data transmission system comprising a transmitting station 1, a transmission wiring or lines 2, a load 3, and a receiving station 4. Under normal conditions, the load on the transmission wiring 2 is subjected to small variations. Therefore, the presence or absence of a signal can easily be detected by a voltage developed across a load impedance ZR' in the receiving station.

Power wiring transmission is often employed for reducing the system cost. With a variety of devices connected randomly to power wiring or lines, the level of detected signal voltages across the load impedance becomes quite small if

$$|\,ZL'\,| \ll |\,ZS'\,|$$

(where ZS' is the load impedance in the transmitting station and ZL' the load impedance). At this time, however, the current flowing thorugh the transmission wiring is substantially at maximum.

With the foregoing prior difficulty in view, it is an object of the present invention to provide a receiving station capable of detecting data transmitted over transmission wiring in a data transmission system irrespective of variations in load impedance characteristics.

There is disclosed in Patents Abstract of Japan. Volume 3, No. 22 (E-93) of 24th Feb. 1979, page 76 (E93) (abstract of JP—A—54813 Tokyo Denryoku K.K) a data transmission system which comprises a transmitting station, a receiving station, and a transmission wiring connecting the receiving and transmitting stations, the receiving station having a receiving circuit for determining whether there is a signal over the transmission wiring with the aid of the sum of a current and a voltage on the transmission wiring. This summation is effected by a receiver which is coupled to receive separately the current and voltage components of the transmitted signal.

However, there is not disclosure whatsoever in this prior art of the manner in which these components are combined in order to provide a detection signal.

According to the present invention there is provided a receiving station (14) for receiving data signals transmitted from a transmitting station (10) over a transmission line (12), the transmission line having a variable load impedance caused by one or more load devices (13) connected thereto, said receiving station including a data detection circuit comprising:

current detector means (17) magnetically coupled to said transmission line (12) for detecting current signal components of said data signals,

voltage detector means (15) directly coupled to said transmission line (12) for generating voltage signal components of said data signals, and

means for generating an output signal by combining said current signal components and said voltage signal components,

characterised in that said current detector means and said voltage detector means are connected in series and in that said generator means comprises output impedance means (ZR) for simultaneously receiving said current signal components and said voltage signal components of said data signal, said output signal comprising a voltage developed across the impedance means (ZR) from said current and voltage signal components of said data signals,

whereby said output signal voltage is generated with a sufficient signal strength to be detectable irrespective of the impedance of the variable load impedance (ZL).

Preferably, the voltage detector means includes a coil (15) in series between a portion of said transmission line (12) an said output impedance means (ZR) and said current detector means includes a core (17) magnetically coupled to said portion of said transmission line, said coil (15) being wound around said core (17).

Preferably there is also provided capacitor means (16) in series with said coil (15) and forming a series resonant circuit therewith, said resonant circuit being tuned to selectively pass only said data signals.

The invention is particularly applicable where the transmission line is a conventional A.C. power supply line and said load devices (13) are power utilization devices connected to said power supply line (12).

The present invention will be better understood from the detailed description given hereinbelow and the accompanying drawings which are given by way of illustration only, and thus are not limitative of the present invention and wherein:

Fig. 1 is an equivalent circuit diagram of a general data transmission system;

Fig. 2 is a circuit diagram of a data transmission system according to an embodiment of the present invention;

Fig. 3 is an equivalent circuit diagram of the arrangement in which the circuit of Fig. 2 is connected as shown by the solid line;

Fig. 4 is an equivalent circuit diagram of the arrangement in which the circuit of Fig. 2 is connected as shown by the dotted line; and

Fig. 5 is a system diagram showing an application in which the present invention is incorporated.

Fig. 2 is a circuit diagram of a data transmission system including a transmitting station and a receiving station according to the present invention. The transmitting and receiving unit comprises a transmitting station 10, a receiving station 14, a transmission wiring or lines 12, and a load 13.

Coil 15 picks up a current flowing through the transmission wiring 12 by way of coupling of magnetic fluxes. The coil 15 also serves to pick up a voltage by being connected to the transmission wiring 12. The coil 15 is wound on an annular core 17 which is threaded by the transmission wiring. A capacitor 16 and the coils 15 constitute a series-connected resonance circuit. The capacitor 16 serves to pick up high frequency dependent on signals transmitted over the transmission wiring 12 while rejecting other frequency components such as power supply frequencies (50/60 Hz).

The coil 15 may be connected to the transmission wiring 12 as shown by either the solid line A or the dotted line B.

Fig. 3 shows an equivalent circuit of the transmitting and receiving unit in which the circuit arrangement of Fig. 2 is connected as illustrated by the solid line A.

A voltage VR across a load impedance ZR in the receiving station can be expressed by the following equation:

$$VR = \frac{(ZL \pm j\omega M) \cdot ZR}{(ZS + ZL + j\omega L1)\left(j\omega L2 + \dfrac{1}{j\omega C} + ZR + ZL\right) - (ZL \pm j\omega M)^2} \cdot ES \qquad (1)$$

where the signs $\pm$ are determined by the direction in which the coil is wound, ZS the load impedance in the transmitting station, ZL the load impedance, L1, L2 the numbers of turns of the coils, C the capacitance of the capacitor 16, and M the mutual inductance of the coils.

If the load impedance $|ZR|$ in the receiving station is selected to be higher than the impedances of the other components, the following expressions can be established in view of the fact that the coil L1 has a single turn and the coil L2 and the capacitor C causes series resonance with respect to a carrier frequency:

$$|ZR| \gg |ZS|, \quad |ZL| \gg |\omega L1|, \quad |\omega M| \gg |\omega L1|, \quad \omega L2 - \frac{1}{\omega C} \approx 0 \qquad (2)$$

By simplifying the equation (1) with the expressions (2) taken into account,

$$VR \approx \frac{ZL \pm j\omega M}{ZL + ZS} \cdot ES \qquad (3)$$

When
$$ZL \to \infty, \quad VR \approx ES \qquad (4)$$

When
$$ZL \to 0, \quad VR \approx \pm \frac{j\omega M}{ZS} \cdot ES \qquad (5)$$

Thus, when the effect of the load is small, the receiving station receives a voltage having substantially the same level as that of a transmitted voltage. When the effect of the load is large, a voltage dependent on the current flowing through the transmission wiring can be produced. Under ordinary conditions, a voltage can be obtained due to a combination of both of the load effects.

Fig. 4 shows an equivalent circuit of the transmitting and receiving unit in which the circuit arrangement of Fig. 2 is connected as illustrated by the dotted line B.

A voltage VR across the load imepdance ZR in the receiving station can be expressed by the following equation:

$$VR = \frac{\{ZL + j\omega(L1 \pm M)\}ZR \cdot ES}{(ZS + ZL + j\omega L1)\left\{ZL + ZR + j\omega(L1 + L2 \pm 2M) + \dfrac{1}{j\omega C}\right\} - \{ZL + j\omega(L1 \pm M)\}^2} \qquad (6)$$

With the inequalities (2) in view, the equation (6) becomes:

# 0 091 824

$$VR \approx \frac{ZL \pm j\omega M}{ZL + ZS} \cdot ES \qquad (7)$$

The equation (7) is the same as the equation (3).

As is apparent from the equation (3) or (7), the received voltage VR in the receiving station may be increased by:

(i) making the impedance ZS as small as possible, and

(ii) making the mutual inductance M as large as possible.

The mutual inductance M is given by:

$$M = K\sqrt{L1 \cdot L2} \qquad (0 < K \leqq 1)$$

Since the coil L1 has a predetermined turn (single turn), the mutual inductance M can be increased by:

(i) coupling the coils L1, L2 closely with each other (K→1), and

(ii) increasing the inductance of the coil L2 (increasing the number of turns of the secondary winding).

A power supply system for a single house in a multiple dwelling house is shown in Fig. 5. The power supply system has a watt-hour meter 21, a main breaker 22, and subbreakers 23 connected to various electric appliances. Where data is to be transmitted between houses in such a multiple dwelling house, the receiving circuit according to the present invention may be incorporated in a receiving station 24 (Fig. 5) for data reception without being affected by the impedance characteristics of the electric appliances in the house.

With the arrangement of the present invention, as described, the receiving station has a receiving circuit which is simultaneously capable of coupling of currents by way of magnetic coupling of coils and also of coupling of voltages by way of wiring connection. This allows data to be transmitted irrespectively of variations in the load impedance characteristics over transmission wiring to which devices of varying impedance characteristics are connected. A data transmission system with the receiving circuit of the invention is of particular advantage when used for power wiring data transmission characterized by a reduced system cost.

**Claims**

1. A receiving station (14) for receiving data signals transmitted from a transmitting station (10) over a transmission line (12) the transmission line having a variable load impedance caused by one or more load devices (13) connected thereto, said receiving station including a data detection circuit comprising:

current detector means (17) magnetically coupled to said transmission line (12) for detecting current signal components of said data signals,

voltage detector means (15) directly coupled to said transmission line (12) for generating voltage signal components of said data signals, and

means for generating an output signal by combining said current signal components and said voltage signal components,

characterised in that said current detector means and said voltage detector means are connected in series and in that said generator means comprises output impedance means (ZR) for simultaneously receiving said current signal components and said voltage signal components of said data signal, said output signal comprising a voltage developed across the impedance means (ZR) from said current and voltage signal components of said data signals,

whereby said output signal voltage is generated with a sufficient signal strength to be detectable irrespective of the impedance of the variable load impedance (ZL).

2. A receiving station according to claim 1, characterised in that said voltage detector means includes a coil (15) in series between a portion of said transmission line (12) and said output impedance means (ZR), and said current detector means includes a core (17) magnetically coupled to said portion of said transmission line, said coil (15) being wound around said core (17).

3. A receiving station according to claim 2 characterised by the provision of capacitor means (16) in series with said coil (15) and forming a series resonant circuit therewith, said resonant circuit being tuned to selectively pass only said data signals.

4. A receiving station according to any preceding claim characterised in that said transmission line (12) is a conventional A.C. power supply line and said load devices (13) are power utilization devices connected to said power supply line (12).

5. A data transmission system comprising a transmitting station (10), a receiving station (14) according to any preceding claim and a transmission line (12) connecting the transmitting and receiving stations.

**Patentansprüche**

1. Empfangsstation (14) für Datensignale, die von einer Sendestation (10) über eine Übertragungsleitung (12) gesendet werden, wobei die Übertragungsleitung eine aus einer oder mehreren

4

Lasten (13) gebildete variable Abschlußimpedanz aufweist, und der Empfangskreis eine Datendetektionsschaltung mit folgenden Teilen aufweist:

Stromdetektoren (17) für Stromsignalkomponenten des Datensignals, die magnetisch mit der Übertraungsleitung (12) gekoppelt sind,

Spannungsdetektoren (15), die zur Erzeugung von Spannungssignalkomponenten des Datensignals direkt mit der Übertragungsleitung (12) gekoppelt sind, und

Vorrichtungen zur Erzeugung eines Ausgangssignals durch Zusammensetzten der Strom- und Spannungssignalkomponenten, dadurch gekennzeichnet, daß die Strom- und Spannungsdetektoren in Serie geschaltet sind und daß die Vorrichtungen zur Erzeugung eines Ausgangssignals eine Ausgangsimpedanz ($Z_R$) zum gleichzeitigen Empfang der Strom- und Spannungssignalkomponenten des Datensignals aufweisen, und das Ausgangssignal eine Spannung aufweist, die über der Impedanz ($Z_R$) aufgrund der Strom- und Spannungssignalkomponenten des Datensignals abfällt, so daß die Ausgangssignalspannung mit genügend hohem Signalpegel erzeugt wird, um unabhängig von der Größe der variablen Abschlußimpedanz ($Z_L$) detektiert werden zu können.

2. Empfangsstation nach Anspruch 1, dadurch gekennzeichnet, daß der Spannungsdetektor eine Spule (15) in Serie zwischen einem Teil der Übertragungsleitung (12) und der Ausgangsimpedanz ($Z_R$) aufweist, und daß der Stromdetektor einen magnetisch mit dem Teil der Übertragungsleitung gekoppelten Kern (17) aufweist, um den die Spule (15) gewickelt ist.

3. Empfangsstation nach Anspruch 2, gekennzeichnet durch einen Kondensator (16) in Serie mit der Spule (15), die zusammen einen Serienresonanzkreis bilden, der so abgestimmt ist, daß er selektiv nur das Datensignal passieren läßt.

4. Empfangsstation nach einem der vorhergehenden Ansprüche, dadurch gekennzeichnet, daß die Übertragungsleitung (12) eine übliche AC-Versorgungsleitung ist und die Abschlußwiderstände (13) mit der Versorgungsleitung (12) verbundene Leistungsverbraucher darstellen.

5. Datenübertragungssystem mit einer Sendestation (10), einer Empfangsstation (14) entsprechend einem der vorhergehenden Ansprüche und einer Übertragungsleitung (12), die die Sende- und Empfangsstation miteinander verbindet.

**Revendications**

1. Poste récepteur (14) pour la réception de signaux de données transmis à partir d'un poste émetteur (10) par l'intermédiaire d'une ligne de transmission (12), cette ligne de transmission possédant une impédance de charge variable produite par un ou plusieurs dispositifs de charge (13) raccordés à la ligne de transmission, ledit poste récepteur comportant un circuit de détection de données comprenant:

des moyens (17) formant détecteur de courant, couplés magnétiquement à ladite ligne de transmission (12) pour détecter les composantes de courant desdits signaux de données,

des moyens (15) formant détecteur de tension, reliés directement à ladite ligne de transmission (12) pour produire les composantes de tension desdits signaux de données, et

des moyens pour générer un signal de sortie par combinaison desdites composantes de courant des signaux et desdites composantes de tension des signaux,

caractérisé en ce que lesdits moyens formant détecteur de courant et lesdits moyens formant détecteur de tension sont branchés en série et en ce que lesdits moyens de génération comprennent des moyens formant impédance de sortie (ZR) destinés à recevoir simultanément lesdits composantes de courant et lesdites composantes de tension dudit signal de données, ledit signal de sortie comprenant une tension qui se développe aux bornes des moyens formant impédance (ZR) à partir desdites composantes de courant et desdites composantes de tension desdits signaux de données,

ce qui a pour effet que ladite tension de sortie du signal est produite avec une intensité suffisante du signal pour qu'elle puisse être détectée quelle que soit la valeur de l'impédance de charge variable (ZL).

2. Poste récepteur selon la revendication 1, caractérisé en ce que lesdits moyens formant détecteur de tension comprennent une bobine (15) branchée en série entre une partie de ladite ligne de transmission (12) et lesdits moyens formant impédance de sortie (ZR), et en ce que lesdits moyens formant détecteur de courant comprennent un noyau (17) couplé magnétiquement à ladite partie de ladite ligne de transmission, ladite bobine (15) étant enroulée autour dudit noyau (17).

3. Poste récepteur selon la revendication 2, caractérisé par la présence de moyens formant condensateur (16) branchés en série avec ladite bobine (15) et formant un circuit résonnant série avec cette dernière, ce circuit résonnant étant accordé de manière à transmettre de façon sélective uniquement lesdits signaux de données.

4. Poste récepteur selon l'une quelconque des revendications précédentes, caractérisé en ce que ladite ligne de transmission (12) est une ligne d'alimentation électrique à courant alternatif classique et lesdits dispositifs de charge (13) sont des dispositifs consommant de l'énergie, raccordés à ladite ligne d'alimentation électrique (12).

5. Système de transmission de données comportant un poste émetteur (10), un poste récepteur (14) selon l'une quelconque des revendications précédentes et une ligne de transmission (12) reliant le poste émetteur et le poste récepteur.

FIG.1

FIG. 2

FIG.3

FIG.4

FIG.5

1